# EUROPEAN PATENT APPLICATION

(11) **EP 4 397 175 A1**
(43) Date of publication of application: **10.07.2024**
(21) Application number: 23215144.9
(22) Date of filing: 08.12.2023
(51) Int. Cl.: A01G 25/09, A01B 79/02, A01C 7/20

(54) **CENTER PIVOT AGRICULTURAL PROCESSING SYSTEM**

(30) Priority: 05.01.2023 US 202318150309
(71) Applicant: Deere & Company, Moline, IL 61265 (US)
(72) Inventor: GRAEVE, JOSHUA D, 68163 Mannheim (DE); ROTH, DARIN L, 68163 Mannheim (DE)
(74) Representative: Stein, Stefan

(57) **Abstract**

An agricultural system includes a center pivot structure establishing an axis of rotation, beam having coupled to the center pivot structure and extending radially outward to a moveable support structure. The moveable support structure and the beam are rotatable about the axis of rotation. A crop processing implement is coupled to the beam between the center pivot structure and the moveable support structure. The crop processing implement is operable to process the crop in the field while the moveable support structure and the beam rotate about the axis of rotation relative to the center pivot structure. The crop processing implement may be powered via the same power source used to power a drive motor of the moveable support structure. A center pivot irrigation system may also be included with the agricultural system.

## Description

### TECHNICAL FIELD

The disclosure generally relates to a center pivot agricultural system for maintaining and processing crop in a field.

### BACKGROUND

Center pivot irrigation is a method of crop irrigation in which irrigation equipment rotates around a center pivot structure. The irrigation equipment may include an elevated beam extending radially outward from the center pivot structure to a distal end, which is supported by a moveable support structure. The beam supports nozzles and/or sprinklers above a ground surface of the field that may be used to irrigate the crops below. The movable support structure and the beam rotate about an axis of rotation defined by the center pivot structure. The sprinklers may irrigate the crops as the moveable support structure and the beam slowly rotate about the axis of rotation, thereby irrigating a circular area of the field. The moveable support structure may include a drive motor, e.g., an electric motor, that is powered by a power source, e.g., electricity, located at the center pivot structure.

### SUMMARY

An agricultural system for maintaining and processing crop in a field is provided. The agricultural system includes a center pivot structure establishing an axis of rotation extending in a substantially vertical orientation. A beam includes an inner radial end coupled to the center pivot structure, and extends radially outward away from the axis of rotation to an outer radial end. The beam is rotatable about the axis of rotation relative to the center pivot structure. A moveable support structure is coupled to the outer radial end of the beam. The moveable support structure is rotatable with the beam about the axis of rotation relative to the center pivot structure. A crop processing implement is coupled to the beam between the center pivot structure and the moveable support structure. The crop processing implement is operable to process the crop in the field while the moveable support structure and the beam rotate about the axis of rotation relative to the center pivot structure.

In one aspect of the disclosure, the crop processing implement may include, but is not limited to, one of a disc, a plow, a planter, a mower, a crop conditioner, a rake, a tedder, a harvester, or a baler. The crop processing implement may include an implement that performs a harvesting operation on the crop in the field. For example, the harvesting operation may include, but is not limited to, discing the field, cultivating the field, planting seeds in the field, cutting the crop, mowing the crop, raking the crop, tedding the crop, baling the crop, collecting the crop, stripping the crop from stems and/or stalks, etc.

In one aspect of the disclosure, the central pivot structure includes a power source. The power source may include, but is not limited to, an electric power source, such as electrical power from a power grid, electrical power from an off-grid power storage unit, such as a battery bank, electrical power from a generator, etc. The agricultural system further includes a power transmitter extending along the beam. The power transmitter interconnects the power source and the crop processing implement, whereby the crop processing implement is powered via the power source from the central pivot structure. The power transmitter may include, but is not limited to, an electrical conductor, such as but not limited to, stranded metal wire or cable.

In one aspect of the disclosure, the crop processing implement includes an implement motor that is coupled to the power transmitter for receiving electrical energy from the electrical power source. The implement motor of the crop processing implement may be used to power one or more functions of the crop processing implement, such as but not limited to, rotating a mower blade, rotating a rake, rotating a drive wheel, etc.

In one aspect of the disclosure, the moveable support structure includes a drive motor that is operable to generate torque for moving the moveable support structure and the beam about the axis of rotation. The drive motor may include, but is not limited to, an electric motor. The power transmitter interconnects the power source from the center pivot structure and the drive motor for supplying the drive motor with energy to move the moveable support structure and the beam about the axis of rotation.

In one implementation of the disclosure, the crop processing implement may include a single component spanning between the center pivot structure and the moveable support structure. In an another implementation, the crop processing implement may include a plurality of individual implements arranged linearly along a length of the beam and positioned immediately adjacent each other.

In one implementation of the disclosure, the agricultural system may include a lift supported by the beam and coupled to the crop processing implement. The lift is operable to position the crop processing implement in a raised position and/or a deployed position. When the lift is controlled to support the crop processing implement in the raised position, the crop processing implement is supported above a ground surface of the field and vertically above the crop to not interfere with the crop. When the lift is controlled to support the crop processing implement in the deployed position, the crop processing implement is disposed adjacent the ground surface of the field at a desired elevation for processing the crop in the field.

The lift may include, but is not limited, a winch attached to one of the beam and the crop processing implement, and an associated line attached to the other of the beam and the crop processing implement. The winch may be controlled to raise and/or lower the crop processing implement between the raised position and the deployed position.

In one implementation of the disclosure, the agricultural system may include a trolley coupled to the beam and supporting the crop processing implement. The trolley is moveable in a radial direction relative to the axis of rotation along the beam to move the crop processing implement radially relative to the axis of rotation along the length of the beam. The trolley is operable to move radially relative to the axis of rotation along the beam concurrent with rotational movement of the moveable support structure and the beam about the axis of rotation. The trolley may include, for example, a motorized drive that receives power from the power source located at the center pivot structure and transmitted via the power transmitter. The motorized drive of the trolley may be controlled to move the trolley, and thereby the crop processing implement attached thereto, radially inward and outward relative to the axis of rotation.

In one aspect of the disclosure, the central pivot structure may include a water source, such as but not limited to a pressurized water supply feed from a grid water system, a well water system, etc. The agricultural system may further include an irrigation system supported by the beam and extending from the center pivot structure radially outward away from the axis of rotation to the moveable support structure. The irrigation system may include a plurality of nozzles or sprinklers for irrigating the crop between the center pivot structure and the moveable support structure as the moveable support structure and the beam rotate about the axis of rotation. It should be appreciated that the irrigation system and the associated sprinklers and/or nozzles thereof are different than the crop processing implement of the agricultural system.

Accordingly, a single agricultural system may be used for planting operations during a planting season, irrigation during a growing season, and harvest operations during a harvest season. The same power source that is sued to power the drive motor of the moveable support structure to move the irrigation system about the axis of rotation, may also be sued to power the crop processing implement in the same manner. By so doing, the center pivot structure, the beam, and the moveable support structure may be used as the infrastructure for both irrigation operations and planting/harvest operations. The crop processing implement may be operated autonomously, much in the same way that the center pivot irrigation system operates. As such, the agricultural system described herein provides an electrified, autonomous solution for performing agricultural operations on crop in the field.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 is a schematic perspective view of an agricultural system.
FIG. 2 is a schematic plan view from above of the agricultural system.
FIG. 3 is a schematic plan view of the agricultural system showing a crop processing implement in a raised position.
FIG. 4 is a schematic plan view of the agricultural system showing the crop processing implement in a deployed position.
FIG. 5 is a schematic plan view showing a first alternative embodiment of the agricultural system.
FIG. 6 is a schematic plan view showing a second alternative embodiment of the agricultural system.
FIG. 7 is a schematic perspective view showing a third alternative embodiment of the agricultural system.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

Referring to the Figures, wherein like numerals indicate like parts throughout the several views, an agricultural system is generally shown at 20. The agricultural system 20 may be used for maintaining and processing crop 22 in a field 24. The crop 22 may include, but is not limited to, grasses, legumes, and/or grains. Grasses may include, but are not limited to, rye grass, timothy, brome, fescue, etc., Legumes may include, but are not limited to, alfalfa, clover, etc. Grains may include, but are not limited to, oats, barley, wheat, corn, etc.

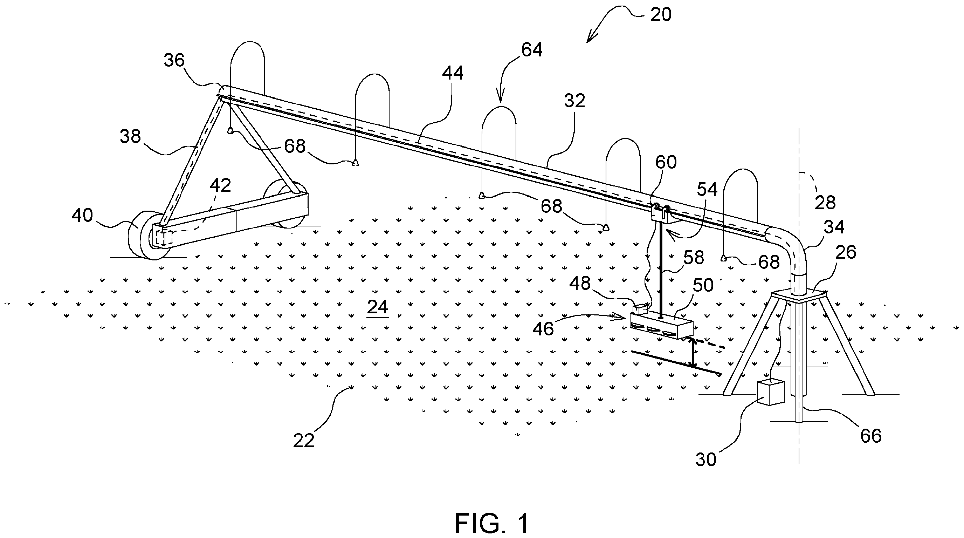

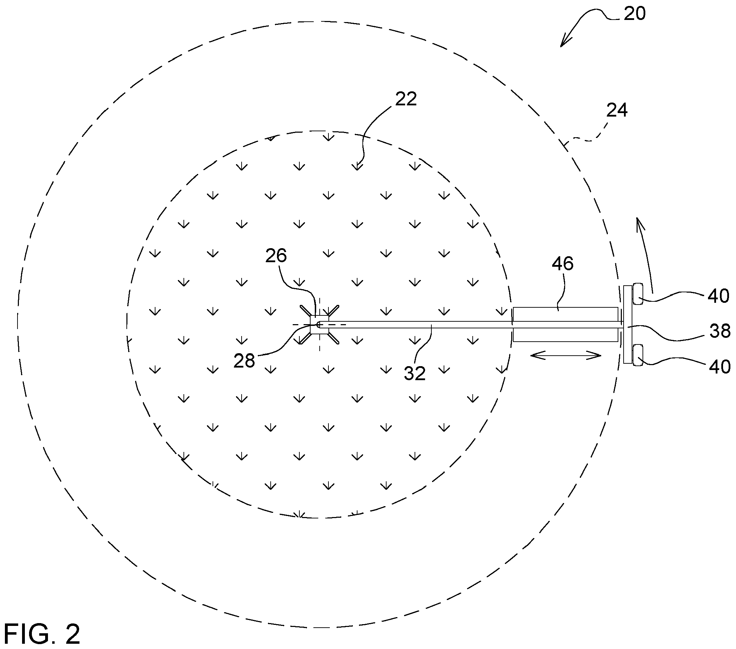

Referring to FIGS. 1 and 2, the agricultural system 20 may be described as a center pivot system. The agricultural system 20 includes a center pivot structure 26. The center pivot structure 26 is a stationary structure and establishes an axis of rotation 28 about which other components of the agricultural system 20 rotate. The axis of rotation 28 extends substantially vertically. As used herein, the term "substantially vertical" should be interpreted to be generally in the direction of gravity, with minor deviations therefrom due to variations in the ground surface and due to standard construction tolerances.

The center pivot structure 26 may include a structure that extends from a ground surface of the field 24 vertically upward to an elevation above the ground surface. For example, the center pivot structure 26 may be formed of structural components that take the form of a pyramid, with the axis of rotation 28 disposed at an approximate center of the pyramid. However, it should be appreciated that the center pivot structure 26 may differ in shape and construction from the example pyramid described herein and shown in the Figures.

The central pivot structure includes a power source 30. The power source 30 may include, but is not limited to, an electric power source 30, such as electrical power from a power grid, electrical power from an off-grid power storage unit, such as a battery bank, electrical power from a generator, etc. In other implementations, the power source 30 may include a hydraulic power source 30, such as but not limited to, a pressurized or moving fluid power source 30. As such, it should be appreciated that the power source 30 is not limited to the electrical power source 30 described herein. Because the center pivot structure 26 is a stationary structure, it should be appreciated that the power source 30 that is staged at the center pivot structure 26 may be considered a fixed or constant power source 30 that is available for continuous and/or uninterrupted use.

The agricultural system 20 further includes a beam 32. The beam 32 includes an inner radial end 34 that is coupled to the center pivot structure 26. The beam 32 extends radially outward away from the center pivot structure 26 and the axis of rotation 28 to an outer radial end 36. The beam 32 is rotatably coupled to the center pivot axis for rotational movement about the axis of rotation 28 relative to the center pivot structure 26. The beam 32 is attached to the raised portion of the center pivot structure 26, such that the beam 32 is elevated above the ground surface of the field 24. The beam 32 is a generally rigid structure that is capable of spanning a desired distance while supporting other components described in greater detail below. In one implementation, the beam 32 may include, but is not limited to, a generally truss like structure manufactured from various rigid components, such as ties, braces, cables, links, etc. Additionally, the beam 32 may be formed to exhibit a convex upper edge for strength and rigidity.

The agricultural system 20 further includes a moveable support structure 38 that is coupled to the outer radial end 36 of the beam 32. The moveable support structure 38 is rotatable with the beam 32 about the axis of rotation 28 relative to the center pivot structure 26. The moveable support structure 38 may include a structure that extends from the ground surface vertically upward to an elevation above the ground surface. The beam 32 is attached to the top of the moveable support structure 38, whereby the beam 32 is elevated above the ground surface. The moveable support structure 38 may be formed from structural components forming a generally triangular shape, with lateral stability provided by the beam 32 and the center pivot structure 26. The moveable support structure 38 includes one or more ground engaging elements 40, such as but not limited to wheels and/or tracks. The ground engaging elements 40 moveably support the moveable support structure 38 on the ground surface. It should be appreciated that the moveable support structure 38 may differ in shape and construction from the example triangular structure described herein and shown in the Figures.

The moveable support structure 38 may include a drive motor 42. The drive motor 42 is operable to generate torque that motivates the ground engaging elements 40 for moving the moveable support structure 38 and the beam 32 about the axis of rotation 28. In other words, the drive motor 42 drives the moveable support structure 38, which being tethered to the center pivot structure 26 via the beam 32, causes the moveable support structure 38 and the beam 32 to rotate about the axis of rotation 28. The drive motor 42 may include, but is not limited to, an electric motor, or a hydraulic motor.

The agricultural system 20 further includes a power transmitter 44. The power transmitter 44 extends along the beam 32 and interconnects the power source 30 and the drive motor 42. As such, the power transmitter 44 may supply the drive motor 42 with energy to motivate and operate the drive motor 42. If the power source 30 is configured to supply electrical energy, then the power transmitter 44 may include an electrical conductor. The electrical conductor may include, but is not limited to, a copper conductor, an aluminum conductor, or some other conducting material that is capable of transmitting electricity from the power source 30 to the drive motor 42. It should be appreciated that the power transmitter 44 may include connections, fittings, isolators, insulators, buses, etc., necessary to connect the power source 30 and the drive motor 42, and span the length of the beam 32 between the center pivot structure 26 and the moveable support structure 38.

The agricultural system 20 further includes a crop processing implement 46 that is coupled to the beam 32. The crop processing implement 46 is disposed between the center pivot structure 26 and the moveable support structure 38. The crop processing implement 46 is operable to process the crop 22 in the field 24 while the moveable support structure 38 and the beam 32 rotate about the axis of rotation 28 relative to the center pivot structure 26. The crop processing implement 46 may include, but is not limited to, one of a disc, a plow, a planter, a mower, a crop conditioner, a rake, a tedder, a harvester, or a baler. The crop processing implement 46 may include an implement that performs a harvesting operation on the crop 22 in the field 24. For example, the harvesting operation may include, but is not limited to, discing the field 24, cultivating the field 24, planting seeds in the field 24, cutting the crop 22, mowing the crop 22, raking the crop 22, tedding the crop 22, baling the crop 22, collecting the crop 22, stripping the crop 22 from stems and/or stalks, etc. As such, the terms "crop processing", "process the crop", or other similar phrases should be interpreted to includes a harvest operation performed on the crop 22. Accordingly, as used herein, the crop processing implement 46 is an implement that performs a function other than irrigation and/or watering of the crop 22 in the field 24.

The power transmitter 44 further interconnects the power source 30 and the crop processing implement 46. As such, the crop processing implement 46 is powered via the power source 30 from the central pivot structure. The crop processing implement 46 may include an implement motor 48. The implement motor 48 may include a motor capable of converting energy into movement. For example, the implement motor 48 may include an electric motor operable to convert electrical energy into a rotational output. In other implementations, the implement motor 48 may include a hydraulic motor operable to convert kinetic fluid energy into rotational output. The implement motor 48 may be coupled to the power transmitter 44 for receiving energy, e.g., electrical energy, from the power source 30. The implement motor 48 of the crop processing implement 46 may be used to power one or more functions of the crop processing implement 46, such as but not limited to, rotating a mower blade, rotating a rake, rotating a drive wheel, etc.

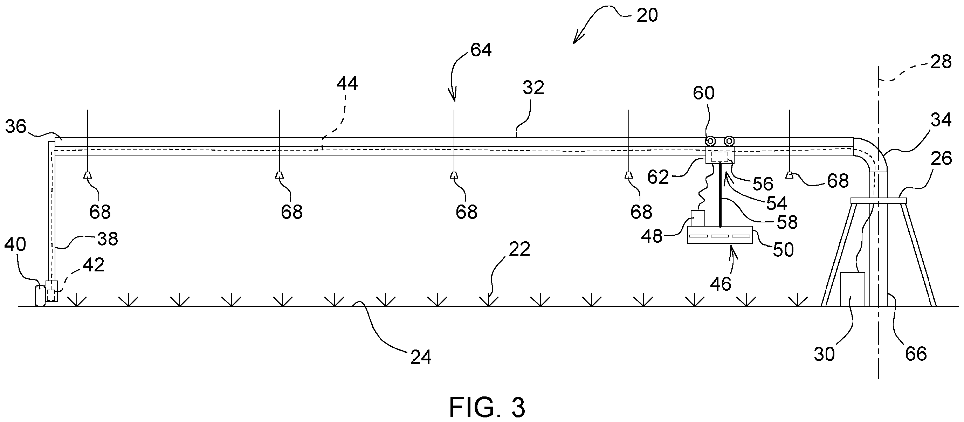

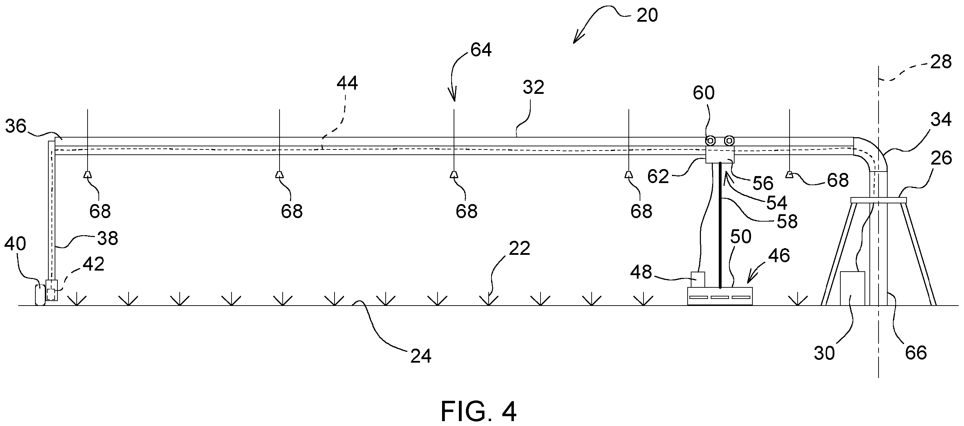

Referring to FIGS. 3 and 4, in one implementation of the disclosure, the agricultural system 20 may include a lift 54. The lift 54 is supported by the beam 32 and is coupled to the crop processing implement 46. The lift 54 is operable to move the crop processing implement 46 between a raised position, shown in FIG. 3, and a deployed position, shown in FIG. 4. When the crop processing implement 46 is disposed in the raised position, the crop processing implement 46 is supported above the ground surface of the field 24 and vertically above and out of the way of the crop 22. When the crop processing implement 46 is disposed in the deployed position, the crop processing implement 46 is disposed adjacent or near the ground surface of the field 24 at a desired elevation for processing the crop 22 in the field 24. The desired elevation for processing the crop 22 in the field 24 may vary based on the specific processing operation being performed. In one example implementation, the desired elevation may be the ground surface elevation of the field 24, for example, for tilling and/or planting operations. In other implementations, the desired elevation may be a set distance above the ground surface but below an upper elevation of the crop 22, e.g., mowing or harvesting operations.

The lift 54 may include a device capable of raising and lowering the crop processing implement 46 relative to the beam 32. For example, one implementation of the lift 54 may include a winch 56 and associated line 58. The winch 56 may be attached to one of the beam 32 and the crop processing implement 46, and the associated line 58 may be attached to the other of the beam 32 and the crop processing implement 46. The winch 56 may be supplied with energy, e.g., electrical energy, from the power source 30 via the power transmitter 44. The winch 56 may be controlled to retract and release the line 58 to raise and lower the crop processing implement 46 respectively.

Referring to FIGS. 3 and 4, in one implementation of the disclosure, the agricultural system 20 may include a trolley 60. The trolley 60 may be coupled to the beam 32 and configured to support the crop processing implement 46. The trolley is moveable relative to the beam 32 in a radial direction relative to the axis of rotation 28 along the beam 32. The trolley is moveable in the radial direction to move the crop processing implement 46 radially relative to the axis of rotation 28 along the length of the beam 32. The trolley 60 may include an actuator 62, for example, an electric motor, that is powered from energy supplied by the power source 30 and communicated to the trolley 60 via the power transmitter 44. The actuator 62 may be engaged to move the trolley 60 radially inward and/or radially outward to reposition the crop processing implement 46 relative to the axis of rotation 28.

In one implementation, the trolley 60 may be operable to move radially relative to the axis of rotation 28 along the beam 32 concurrent with rotational movement of the moveable support structure 38 and the beam 32 about the axis of rotation 28. Accordingly, the crop processing implement 46 be moved in the circumferential direction as the moveable support structure 38 and the beam 32 rotate about the axis of rotation 28 while simultaneously moving in the radially direction via trolley 60. Alternatively, the moveable support structure 38 and the beam 32 may make one complete revolution about the axis of rotation 28 with the trolley 60 at a constant radial position. Upon completion of the previous revolution and prior to beginning the next revolution, the trolley 60 may move the crop processing implement 46 radially to reposition the crop processing implement 46 for the next revolution. Accordingly, the crop processing implement 46, may span a lesser distance than the entire desired harvest length between the center pivot structure 26 and the moveable support structure 38, and be moved radially via the trolley 60 to cover the entire desired length.

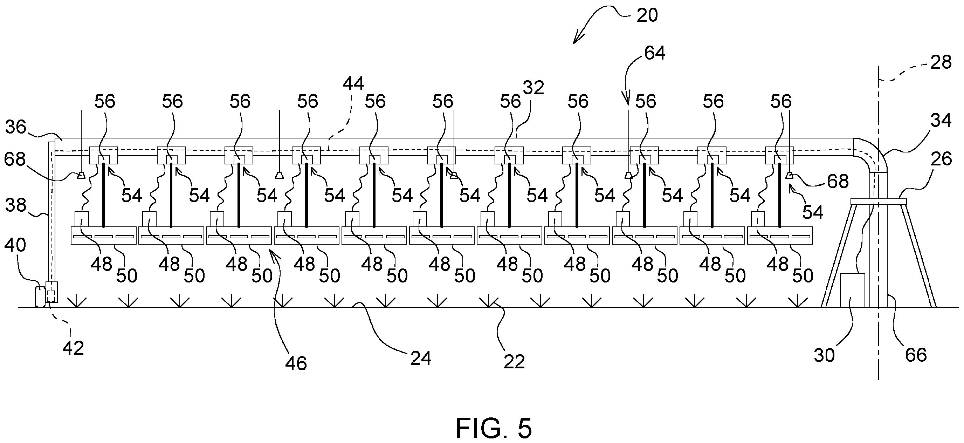

In one implementation of the disclosure, shown in FIG. 5, the crop processing implement 46 includes a plurality of individual implements 50 arranged linearly along a length of the beam 32, one immediately adjacent the next. The plurality of individual implements 50 may include a number sufficient to span a desired length between the center pivot structure 26 and the moveable support structure 38. The span length of the plurality of individual implements 50 defines the radius of a circular area over which the crop processing implement 46s are operable. The number of individual implements 50 is dependent upon a length of each independent implement and the desired span.

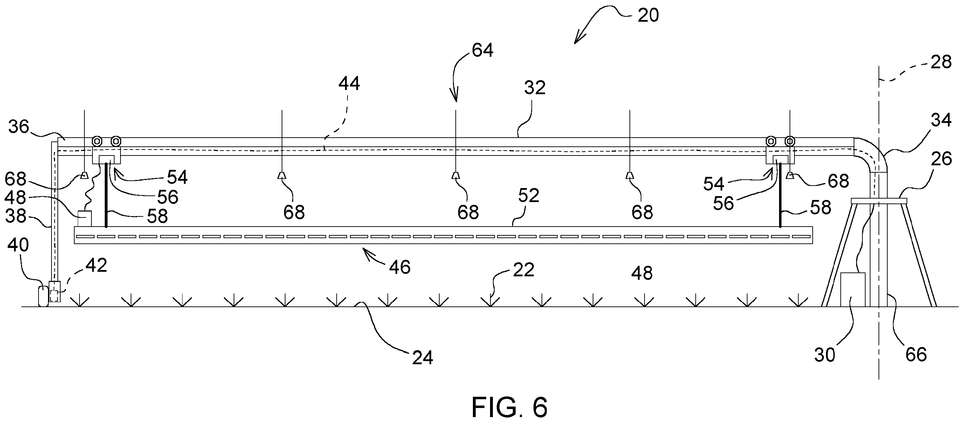

In one implementation of the disclosure, shown in FIG. 6, the crop processing implement 46 includes a single, unitary implement 52 configured to span the entirety of the desired length between the center pivot structure 26 and the moveable support structure 38. The length of the single unitary implement 52 may be defined to equal the desired length or radius of crop 22 operations. In one example implementation, the length of the single unitary implement 52 may be approximately equal to a length of the beam 32 spanning between the center pivot structure 26 and the moveable support structure 38. Accordingly, it should be appreciated that the implementation shown in FIG. 5 includes multiple individual implements 50 spanning the desired length of crop 22 operations, e.g. radius of the crop 22 circle, whereas the implementation shown in FIG. 6 includes the single unitary implement 52 spanning the desired length of crop 22 operations, e.g., the radius of the crop 22 circle. Optionally, the agricultural system 20 may include the lift 54 described above to raise and lower the single implement. In other implementations, the single implement may remain continuously disposed on the ground surface and tethered to beam 32 and the power transmitter 44 for energy.

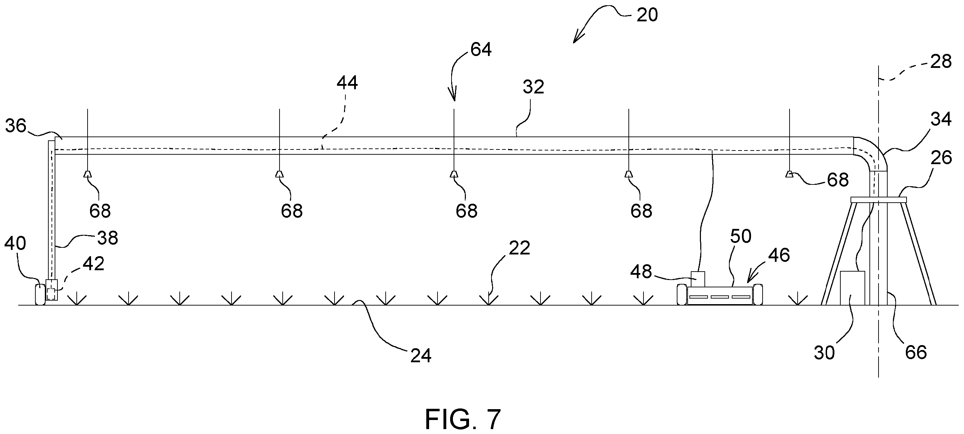

Referring to FIG. 7, another alternative embodiment of the agricultural system 20 is shown. As shown in FIG. 7, the crop processing implement 46 includes ground engaging elements 40, such as wheels and/or tracks, which support the crop processing implement 46 directly on the ground surface. Each of the ground engaging elements 40 of the crop processing implement 46 may include a respective drive motor 42. The drive motors 42 of the crop processing implement 46 may be powered from the power source 30 via the power transmitter 44. The position of the crop processing implement 46 may controlled via the respective rotational output and speed of the ground engaging elements 40. The crop processing implement 46 may include a position locating sensor 70, such as but not limited to a Global Positioning Sensor system, that is operable to detect and/or determine the location of the crop processing implement. A system controller may then control the rotational output of the respective drive motors 42 of the ground engaging elements 40 of the crop processing implement 46 to control the radial position of the crop processing implement 46 relative to the axis of rotation 28.

In one implementation of the disclosure, the agricultural system 20 may further include a center pivot irrigation system 64. As noted above, the irrigation system 64 is separate from the crop processing implement 46. As such, the central pivot structure may include a water source 66. The water source 66 may include but is not limited to a pressurized water supply feed from a grid water system, a well water system, etc. The irrigation system 64 may be supported by the beam 32 and extend from the center pivot structure 26 radially outward away from the axis of rotation 28 to the moveable support structure 38. The irrigation system 64 may include a plurality of nozzles or sprinklers 68 for irrigating the crop 22 between the center pivot structure 26 and the moveable support structure 38 as the moveable support structure 38 and the beam 32 rotate about the axis of rotation 28. It should be appreciated that the irrigation system 64 and the associated sprinklers 68 thereof are different than the crop processing implement 46 of the agricultural system 20. Additionally, the center pivot irrigation system 64 as described herein is understood by those skilled in the art, and is therefore not described in greater detail herein.

The agricultural system 20 described herein may leverage the existing infrastructure of existing center pivot irrigation systems 64, including but not limited to the center pivot structure 26, the beam 32, the moveable support structure 38, and the power source 30, to provide not only irrigation operations, but also the other harvest operations as described above using the crop processing implement 46.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. An agricultural system (20) for maintaining and processing crop (22) in a field (24), the agricultural system (20) comprising:
a center pivot structure (26) establishing an axis of rotation (28) extending substantially vertically;
a beam (32) having an inner radial end (34) coupled to the center pivot structure (26) and extending radially outward away from the axis of rotation (28) to an outer radial end (36), wherein the beam (32) is rotatable about the axis of rotation (28) relative to the center pivot structure (26);
a moveable support structure (38) coupled to the outer radial end (36) of the beam (32) and rotatable with the beam (32) about the axis of rotation (28) relative to the center pivot structure (26); and
a crop processing implement (46) coupled to the beam (32) between the center pivot structure (26) and the moveable support structure (38), wherein the crop processing implement (46) is operable to process the crop (22) in the field (24) while the moveable support structure (38) and the beam (32) rotate about the axis of rotation (28) relative to the center pivot structure (26).

2. The agricultural system (20) set forth in claim 1, wherein the center pivot structure (26) includes a power source (30).

3. The agricultural system (20) set forth in claim 1 or 2, further comprising a power transmitter (44) extending along the beam (32) and interconnecting the power source (30) and the crop processing implement (46), whereby the crop processing implement (46) is powered via the power source (30) from the center pivot structure (26).

4. The agricultural system (20) according to at least one of the preceding claims, wherein the power source (30) includes an electrical power source (30) and the power transmitter (44) includes an electrical conductor.

5. The agricultural system (20) according to at least one of the preceding claims, wherein the crop processing implement (46) includes an implement motor (48) coupled to the power transmitter (44) for receiving electrical energy from the electrical power source (30).

6. The agricultural system (20) according to at least one of the preceding claims, wherein the moveable support structure (38) includes a drive motor (42) operable to generate torque for moving the moveable support structure (38) and the beam (32) about the axis of rotation (28).

7. The agricultural system (20) according to at least one of the preceding claims, wherein the power transmitter (44) interconnects the power source (30) and the drive motor (42) for supplying the drive motor (42) with energy.

8. The agricultural system (20) according to at least one of the preceding claims, wherein the crop processing implement (46) includes a plurality of implements (46) arranged linearly along a length of the beam (32).

9. The agricultural system (20) according to at least one of the preceding claims, further comprising a lift (54) supported by the beam (32) and coupled to the crop processing implement (46), wherein the lift (54) is operable to position the crop processing implement (46) in a raised position supported above a ground surface of the field (24) and vertically above the crop (22), and a deployed position in which the crop processing implement (46) is disposed adjacent the ground surface of the field (24) at a desired elevation for processing the crop (22) in the field (24).

10. The agricultural system (20) according to at least one of the preceding claims, wherein the lift (54) includes a winch (56) attached to one of the beam (32) and the crop processing implement (46), and an associated line (58) attached to the other of the beam (32) and the crop processing implement (46).

11. The agricultural system (20) according to at least one of the preceding claims, further comprising a trolley (60) coupled to the beam (32) and supporting the crop processing implement (46), wherein the trolley (60) is moveable in a radial direction relative to the axis of rotation (28) along the beam (32) to move the crop processing implement (46) radially relative to the axis of rotation (28) along the length of the beam (32).

12. The agricultural system (20) according to at least one of the preceding claims, wherein the trolley (60) is operable to move radially relative to the axis of rotation (28) along the beam (32) concurrent with rotational movement of the moveable support structure (38) and the beam (32) about the axis of rotation (28).

13. The agricultural system (20) according to at least one of the preceding claims, wherein the crop processing implement (46) includes one of a mower, a crop conditioner, a rake, a tedder, a harvester, or a baler.

14. The agricultural system (20) according to at least one of the preceding claims, wherein the center pivot structure (26) includes a water source (66).

15. The agricultural system (20) according to at least one of the preceding claims, further comprising an irrigation system (64) supported by the beam (32) and extending from the center pivot structure (26) radially outward away from the axis of rotation (28) to the moveable support structure (38), wherein the irrigation system (64) includes a plurality of nozzles (68) for irrigating the crop (22) between the center pivot structure (26) and the moveable support structure (38) as the moveable support structure (38) and the beam (32) rotate about the axis of rotation (28).
